# EUROPÄISCHE PATENTSCHRIFT

(11) **EP 2 654 974 B1**
(45) Veröffentlichungstag und Bekanntmachung des Hinweises auf die Patenterteilung: **06.02.2019**
(21) Anmeldenummer: 11802909.9
(22) Anmeldetag: 19.12.2011
(51) Int. Cl.: B05D 1/30, B05D 5/06, B05D 1/40, B05D 7/06, B05D 7/00, C09D 5/00

(54) **HOCHGLANZOBERFLÄCHE DURCH HOTCOATING**
HIGH-GLOSS SURFACE BY MEANS OF HOT-COATING
SURFACE SUPERBRILLANTE PAR REVÊTEMENT À CHAUD

(30) Priorität: 20.12.2010 DE 102010063554
(43) Veröffentlichungstag der Anmeldung: 30.10.2013
(73) Patentinhaber: Klebchemie M.G. Becker GmbH & Co. KG, 76356 Weingarten/Baden (DE)
(72) Erfinder: BECKER-WEIMANN, Klaus, 76530 Baden-Baden (DE); FANDREY, Jens, 75180 Pforzheim (DE)
(74) Vertreter: Büchel, Edwin
(86) Internationale Anmeldenummer: PCT/EP2011/073217
(87) Internationale Veröffentlichungsnummer: WO 2012/084805

(56) Entgegenhaltungen:
- WO-A1-2006/066954
- WO-A1-2007/026919
- WO-A2-2008/152137
- DE-A1-102008 031 958
- DE-A1-102009 002 048

## Beschreibung

Die vorliegende Erfindung betrifft ein Verfahren zur Erzeugung von Hochglanzoberflächen.

Die Nachfrage nach Hochglanzoberflächen für Elementoberflächen der Möbel- und holzverarbeitenden Industrie sowie bei der Herstellung von Fußböden ist in jüngster Zeit gestiegen.

Der Glanz von Oberflächen ist dabei ein optischer Eindruck, der bei einer Betrachtung einer Oberfläche entsteht, wobei dann ein Objekt als glänzend empfunden wird, wenn der größte Teil des auf die Oberfläche treffenden Lichts gerichtet und nur ein kleiner Teil diffus reflektiert wird. Hochglanzoberflächen hoher Qualität vermitteln einen einer Glasoberfläche ähnlichen Glanz. Der Glanzgrad kann beispielsweise mit entsprechenden Glanzgradmessgeräten bestimmt werden, wobei die Reflexion eines unter einem definierten Messwinkel auftreffenden Lichtstrahls ermittelt wird. Üblicherweise wird als Hochglanz ein Glanzgrad von 80-100 bei einem 60° Messwinkel bezeichnet.

Um entsprechende Hochglanzoberflächen zu erzeugen, ist bisher bekannt, Hochglanzfolien in Form von speziellen Kunststoffplatten oder Kunststofffolien auf Trägerplatten aufzulaminieren. Hierbei können Trägerplatten unterschiedlichster Form und Materials beschichtet werden. Allerdings ist die Dekorvielfalt derartiger Kunststoffplatten bzw. -folien eingeschränkt und ihre Kosten sind hoch.

Ein ebenfalls bekanntes Verfahren sieht vor, dass bereits bei der Herstellung einer Trägerplatte eine Veredelung vorgenommen wird. Holzwerkstoffplatten, beispielsweise MDF- oder HDF-Platten werden mit Papier beschichtet, vorzugsweise sogenannte Melaminpapiere, die mit Melaminharz auf die Platte aufgebracht und versiegelt werden, wobei eine direktbeschichtete Trägerplatte erzeugt wird. Um eine gewünschte Hochglanzoberfläche zu erreichen, wird auf derart vorbereitete Trägerplatten transparente Kunststofffolien aufkaschiert. Nachteilig hierbei ist, dass das aufgebrachte Kaschiermittel in hohem Maße homogen, mit gleichmäßiger Schichtdicke aufgebracht werden muss. Ferner weisen die verwendbaren Kunststofffolien eine nennenswerte Dicke auf, um eventuelle Unebenheiten der Trägerplatten oder des Kaschiermittelauftrags auszugleichen, wodurch die Kosten steigen.

Die Verwendung von Lacken zur Erzeugung einer Hochglanzoberfläche auf entsprechend vorbereitete, direktbeschichtete Trägerplatten ist bisher nur mit großem Aufwand möglich, da Lacke auf Melaminschichten nur schlechte Hafteigenschaften zeigen. So kommen Lacke, welche zwar günstige Eigenschaften zeigen, beispielsweise eine schnelle Trocknung und eine hohe Feuchtigkeits- und Reinigungsmittelresistenz, bei der Herstellung von Hochglanzoberflächen bisher nur selten zum Einsatz.

Die geringe Hafteigenschaft von Lacken liegt häufig in deren chemischer und/oder physikalischer Natur und derjenigen der zu lackierenden Gegenstandsoberfläche begründet, wobei bekannt ist, eine Erhöhung der Haftung durch eine Vorbehandlung der Gegenstandsoberfläche zu erreichen. Hierbei kommen Haftvermittlerschichten zum Einsatz, welche die Hafteigenschaften der zusammenzufügenden Elemente verbessern und ferner Unebenheiten auf den Gegenstandsoberflächen ausgleichen können.

Aus DE 10 2009 002 048 A1 die Verwendung einer Reaktiv-Schmelzmasse auf Polyurethanbasis als dünne Haftvermittlerschicht in Zusammenhang mit einer anschließend aufzubringenden Lackschicht bekannt. Allerdings geht der Einsatz einer Haftvermittlerschicht im Zusammenhang mit der Erzeugung einer Hochglanzoberfläche nicht hervor.

WO 2008/152137 A2 beschreibt ein Verfahren zur Herstellung einer dekorativen Oberfläche auf einer Trägersubstratoberfläche, wobei eine mit einem dekorativen Element bedruckte, thermoplastische Klebstofffolie auf die entsprechende Substratfolie aufgebracht wird.

In DE 10 2008 031958 A1 wird ein Verbundmaterial beschrieben, umfassend ein Trägersubstrat, auf dem eine Schmelzklebstoffschicht aufgebracht und anschließend geglättet wird. Auf dieser wird anschließend ein folienartiges Dekormaterial aufgebracht und anschließend geglättet. Das folienartige Dekormaterial ist eine Papier- oder Pappfolie, Furniere, Metalle oder Kunststofffolien aus Thermoplasten.

WO 2006/066954 A1 bezieht sich auf ein Verfahren zur Versiegelung einer Oberfläche durch Aufbringen einer Reaktiv-Schmelzmasse-Schicht auf Polyurethanbasis und gegebenenfalls Glätten dieser Schicht. Auf diese Schicht wird anschließend eine Lackschicht aufgebracht.

Allgemein kommen Lacksysteme, basierend auf UV-härtenden Lacken, bei der Möbel- und Fußbodenherstellung zum Einsatz, welche per Walzenauftrag, seltener per Sprühauftrag auf die entsprechenden Teile aufgebracht werden. Der anschließende Aushärtevorgang erfolgt mittels UV-Licht bzw. UV-Lampen. Der maschinelle Aufwand bei einer Lackierung ist sehr hoch, ebenso wie der Raumbedarf. Dies ergibt sich teilweise durch einen mehrschichtigen Lackauftrag - in der Praxis sind drei bis vier Aufträge üblich - da je Lackauftrag aufgrund der Viskosität und aufgrund der UV-Durchhärtung nur sehr dünne Schichten von ca. 10 bis 20 µm applizierbar sind. Zusätzlich sind meistens mehrere Lackzwischenschliffe notwendig, um eine entsprechend glatte Oberfläche zu erzielen, wie sie für Hochglanzqualitäten erforderlich sind.

Insbesondere hochabriebbeständige Hochglanzoberflächen, welche beispielsweise eine Abriebfestigkeit der Abriebklasse > AC5 aufweisen, können über einen Zusatz von abrasiven Materialien in den verwendeten Lacksystemen, beispielsweise Aluminiumoxid- oder Keramikpartikel, erzielt werden. Bei Verwendung derartiger korundhaltiger Lacksysteme sind Zwischenschliffe kaum durchführbar, so dass entsprechende Hochglanzoberflächen nicht erzielt werden können.

Dies führt dazu, dass eine hohe Abriebbeständigkeit, welche beispielsweise bei für den Fußbodenbereich oder als Arbeitsfläche erforderlich ist und der Wunsch nach einer sehr glatten, hochglänzenden Oberfläche nur mit hohem Aufwand vereinbar sind.

Eine Aufgabe der vorliegenden Erfindung besteht daher darin, ein effizienteres Verfahren zur Erzeugung von Hochglanzoberflächen bereitzustellen, wobei die oben genannten Nachteile vermieden werden.

Die Aufgabe wird gelöst durch ein Verfahren zur Erzeugung von Hochglanzoberflächen auf mindestens einen Teil einer Trägerfläche die Schritte umfassend:
a) Aufbringen einer Schicht aus einer Schmelzmasse auf mindestens einen Teil der Trägerfläche mittels einer Walzenvorrichtung, umfassend mindestens eine Dosierwalze und eine in eine Umdrehungsrichtung umlaufende Auftragswalze;
b) Glätten der aufgebrachten Schmelzmassenschicht durch eine entgegen der Umdrehungsrichtung der Auftragswalze umlaufende Glättwalze;
c) Aufbringen mindestens einer Lackschicht auf die geglättete Schmelzmassenschicht mittels Curtain-Coating-Verfahren;
d) Aushärten des aufgebrachten Schichtaufbaus.

Es wurde überraschend gefunden, dass der Einsatz einer Schmelzmasse, insbesondere einer Recktiv-Schmelzmasse auf Basis eines Polyurethans auf einer Trägerfläche, insbesondere eine mit einem Melaminpapier beschichtete Holzspan- oder MDF/HDF-Platte, eine homogene und glatte Oberfläche schafft, welche darüber hinaus für eine in einem nachfolgenden Schritt aufzubringende Lackschicht die Bedingungen derart verbessert, dass eine Hochglanzoberfläche hoher Qualität erzeugt werden kann.

Insbesondere kann eine derartige Hochglanzoberfläche auch dann erreicht werden, wenn die Melaminoberfläche eine gewisse Textur und Rauhtiefe aufweist, wie dies beispielsweise bei handelsüblichen, mit einer Oberfläche versehenen Standardplatten üblich ist, welche häufig eine Struktur z.B. Miniperlstruktur aufweisen. Demnach ist es nicht erforderlich, dass eine mit einer Melaminkaschierung versehene Platte vorbereitet werden muss, wie dies teilweise im bei Lackierverfahren notwendig ist.

Die Schmelzmasse kann auf Polyolefinen, Ethylvinylacetaten (EVA), Polyamiden oder Polyurethanen basieren. Vorzugsweise handelt es sich bei der Schmelzmasse um eine Reaktivschmelzmasse, insbesondere auf Basis eines Polyurethans.

Bei der bevorzugten Reaktiv-Schmelzmasse auf Polyurethanbasis handelt es sich vorzugsweise um eine handelsübliche Reaktiv-Schmelzmasse auf Polyurethanbasis, welche vorzugsweise durch die Feuchtigkeit der umgebenden Luft reagiert und aushärtet. Vorzugsweise ist diese Reaktiv-Schmelzmasse Wasser- und Lösungsmittelfrei, welche mittlerweile im Rahmen der "HotCoating"-Technologie zur Veredelung von Oberflächen eingesetzt wird. Neben einer einfachen Applikation zeichnen sich derartige Reaktiv-Schmelzmassen auf Polyurethanbasis durch Resistenz gegenüber Wasserdampf, Feuchtigkeit und Chemikalien und eine Unempfindlichkeit gegenüber mechanischer Beanspruchung aus. Die Haftvermittlereigenschaft derartiger Reaktiv-Schmelzmassen ist hoch, so dass nur dünne Schichten notwendig sind. Insbesondere überraschend ist in diesem Zusammenhang, dass eine aufgebrachte Reaktiv-Schmelzmassenschicht aushärten kann, obwohl diese beispielsweise durch eine Lackschicht von der umgebenden Luft bzw. der darin enthaltenden Feuchtigkeit abgeschirmt ist, welche eine Quervernetzung und somit eine Aushärtung erwirkt.

Weiterhin überraschend ist es, dass hier auch hoch abriebfeste, abrasive Materialien enthaltende Schmelzmassen einsetzbar sind. Derartige Schmelzmassen lassen sich in vergleichbarer Weise verarbeiten, wobei hohe Schichtstärken, beispielsweise in einem Bereich von 60-100µm, realisiert werden. Eine Hochglanzoberfläche wird überraschend ohne erforderliche Zwischenschliffschritte erzielt. Insbesondere können hochabriebbeständige Hochglanzoberflächen, welche beispielsweise eine Abriebfestigkeit der Abriebklasse > AC5, gemäß DIN EN 13329 aufweisen, erzeugt werden. Geeignete abrasive Materialien sind beispielsweise Aluminiumoxid- oder Keramikpartikel. Bevorzugt ist die Schmelzmasse korundhaltig.

Geeignete Trägerflächen stellen Elementoberflächen dar, beispielsweise für Laminat-, Dielen- oder Parkettböden, für Paneele oder Furniere oder für Möbel oder Möbelstücke. Die Trägerflächen können aus Holz oder einem holzartigen Material sein, beispielsweise einem Furnier oder Faserplatten, wobei diese vorhergehend mit Papier, Kunststoff oder anderen Materialien belegt werden können.

Die Schmelzmasse kann auf die zu beschichtende Fläche, insbesondere eine mit einer Melaminschicht versehene Holzspan- oder MDF/HDF-Platte, aufgewalzt, aufgesprüht oder mittels einer Düse oder Schlitzdüse aufgebracht werden. Erfindungsgemäß wird die Schmelzmasse mittels einer Walzenvorrichtung auf eine entsprechende Gegenstandsoberfläche aufgebracht. Die Trägerflächen, z.B. in Form von Trägerplatten, werden hierfür mittels einer Transportvorrichtung in einer bestimmten Transportrichtung und mit einer Transportgeschwindigkeit an der Walzenvorrichtung vorbei transportiert, wobei Schmelzmasse mittels mindestens einer Dosierwalze und einer Auftragswalze, welche vorzugsweise mit einer Umdrehungsgeschwindigkeit im Bereich von 5-60 m/min, vorzugsweise 10-25 m/min umdreht, aufgebracht wird. Die aufgebrachte Schmelzmassenschicht wird anschließend mittels einer nachgeordneten Glättwalze, welche entgegen der Auftragswalze, beispielsweise mit einer Umdrehungsgeschwindigkeit im Bereich von 1-30 m/min, vorzugsweise 1-6 m/min umläuft, geglättet. Als günstig erweist sich, ein Auftrag unter Luftabschluss bzw. unter Abschirmung von Luftfeuchtigkeit durchzuführen.

Vorzugsweise weist die Schmelzmassenschicht eine Dicke im Bereich von 5 bis 200 µm, bevorzugt von 10 bis 60 µm auf.

Die Schmelzmasse wird üblicherweise bei einer Temperatur von mindestens 100°C, etwa 100°C bis 150°C, vorzugsweise 120°C bis 150°C, aufgebracht. Beispielsweise ist die Auftragswalze entsprechend temperiert, wobei die Glättwalze, welche ebenfalls beheizbar sein kann, eine von der Auftragswalze unterschiedliche Temperatur aufweisen kann.

Anschließend wird auf die aufgebrachte und geglättete Schmelzmassenschicht, bevorzugt vor einem vollständigen Aushärten der Schmelzmassenschicht, eine Lackschicht eines Hochglanzlackes aufgebracht, wobei eine merkliche Zeitersparnis erwirkt wird. Die aufgebrachte Schmelzmassenschicht stellt eine Oberfläche bereit, auf welche der aufzubringende Hochglanzlack gut zerfließt und sich homogen verteilt.

In dem nun folgenden Verfahrensschritt wird der Hochglanzlack auf die derart vorbereitete Trägerfläche aufgebracht, wobei erfindungsgemäß bevorzugt ein sogenanntes Naß-in-Naß-Verfahren eingesetzt wird. Vorzugsweise kommt ein UVhärtender Hochglanzgießlack, elektronenstrahl-härtender Lack, Keramiklack und/oder Wasserlack zum Einsatz, welcher mittels des bekannten Curtain-Coating-Verfahrens aufgetragen wird. Hierbei wird die mittels vorhergehender Verfahrensschritte vorbereitete Trägerfläche durch einen aus flüssigem Lack bestehenden Lackvorhang hindurchbewegt, wobei ein Lack mit einer Beschichtung im Bereich von 100 bis 160 g pro Quadratmeter aufgebracht wird.

Optional kann anschließend an die Glättung der Schmelzmassenschicht (Schritt b)) und vor dem Aufbringen des Hochglanzlackes im Curtain-Coating-Verfahren (Schritt c)) mindestens eine erste Lackschicht aufgebracht werden, bevor mindestens eine weitere Schicht in Schritt (c) folgt. Dabei kann es sich um einen beliebigen Lack handeln, der vorteilhafterweise schnell aushärtet, um eine rasche Weiterverarbeitung zu ermöglichen. Geeignete Lacke können beispielsweise als Klar-, Weiß- oder Farblack eingesetzt werden, welche beispielsweise als Nitrolacke, elektronenstrahl-härtender Lack, Keramiklack, Wasserlacke oder 2K-PUR-Lacke verwendet werden. Vorzugsweise kommen jedoch UV-härtende Lacke zum Einsatz. Bei einem derartigen Lackauftrag kann nur eine ca. 10 bis 20 µm dicke Schicht appliziert werden, so dass eine UV-Durchhärtung noch in angemessenem Zeitrahmen möglich ist. Der optionale Lackierschritt kann mittels üblicher Verfahren erfolgen, beispielsweise durch Walzenauftrag, im Sprühverfahren oder Ink-Jet. Mit diesem optionalen Verfahrensschritt steht eine sehr glatte Trägerfläche zur Verfügung, auf welcher in dem nachfolgenden Verfahrensschritt eine weitere Lackschicht aufgebracht werden kann, um beispielsweise eine Hochglanzoberfläche höchster Qualität zu erreichen.

Nach dem Aufbringen des Hochglanzlacks erfolgt eine Aushärtung der aufgetragenen Schichten, wobei vorzugsweise eine Ruhephase insbesondere von einigen Minuten, wie beispielsweise mindestens 1 Minute, eingehalten wird, damit sich die mindestens eine Lackschicht homogen auf der Oberfläche verteilt.

Die Aushärtung der aufgetragenen, bevorzugt UV-härtenden mindestens einen Lackschicht erfolgt durch Bestrahlung mit Hilfe gängiger Vorrichtungen, beispielsweise UV-Lampen. Zur Erzeugung einer Hochglanzoberfläche hoher Qualität ist es von Bedeutung, dass während des Aushärtungsvorgangs die belegte Oberfläche möglichst frei von unerwünschten Partikeln bleibt. Dafür kann in der Vorrichtung zur Bestrahlung, welcher bevorzugt in Form eines Tunnels bereitsteht, ein Überdruck erzeugt werden, so dass Eindringen von Fremdpartikeln, z.B. Staubpartikeln, vermieden wird.

## Patentansprüche

1. Verfahren zur Erzeugung von Hochglanzoberflächen auf mindestens einen Teil einer Trägerfläche, die Schritte umfassend:
a) Aufbringen einer Schicht aus einer Schmelzmasse auf mindestens einen Teil der Trägerflächemittels mittels einer Walzenvorrichtung, umfassend mindestens eine Dosierwalze und eine in eine Umdrehungsrichtung umlaufende Auftragswalze;
b) Glätten der aufgebrachten Schmelzmassenschicht durch eine entgegen der Umdrehungsrichtung der Auftragswalze umlaufende Glättwalze;
c) Aufbringen mindestens einer Lackschicht auf die geglättete Schmelzmassenschicht mittels Curtain-Coating-Verfahren;
d) Aushärten des aufgebrachten Schichtaufbaus.

2. Verfahren nach Anspruch 1, **dadurch gekennzeichnet, dass** die Schmelzmasse eine Reaktiv-Schmelzmasse, insbesondere auf Basis eines Polyurethans ist.

3. Verfahren nach Anspruch 1 oder 2, **dadurch gekennzeichnet, dass** die Auftragswalze mit einer Umdrehungsgeschwindigkeit im Bereich von 5 bis 60 m/min, vorzugsweise 10 bis 25 m/min umläuft.

4. Verfahren nach Anspruch 1 bis 3, **dadurch gekennzeichnet, dass** die Glättwalze mit einer Umdrehungsgeschwindigkeit im Bereich von 1 bis 30 m/min, vorzugsweise 1 bis 6 m/min umläuft.

5. Verfahren nach einem der Ansprüche 1 bis 4, **dadurch gekennzeichnet, dass** die in Schritt a) aufgebrachte Schmelzmasse ein abrasives Material enthält.

6. Verfahren nach einem der Ansprüche 1 bis 5, **dadurch gekennzeichnet, dass** die in Schritt c) aufzubringende Lackschicht einen UV-härtenden Hochglanzgießlack umfasst.

7. Verfahren nach einem der Ansprüche 1 bis 6, **dadurch gekennzeichnet, dass** vor dem Schritt c) mindestens eine erste Lackschicht, umfassend einen UV-härtenden Lack, mit Hilfe einer Walze, über Sprüheinrichtungen oder mittels Ink-Jet aufgebracht wird.

8. Verfahren nach einem der Ansprüche 1 bis 7, **dadurch gekennzeichnet, dass** der Schritt c) gemäß einem Naß-in-Naß-Verfahren erfolgt.

9. Verfahren nach einem der Ansprüche 1 bis 8, **dadurch gekennzeichnet, dass** vor Schritt d) zur Aushärtung eine Ruhephase eingehalten wird.

10. Verfahren nach einem der vorhergehenden Ansprüche 1 bis 9, **dadurch gekennzeichnet, dass** die Trägerfläche aus Holz oder holzartigem Material ist, welches mit Papier, Kunststoff oder einem anderen Material belegt ist.

11. Verfahren nach Anspruch 10, **dadurch gekennzeichnet, dass** die Trägerfläche mit Melamin belegt ist.

12. Verfahren nach einem der vorhergehenden Ansprüche 1 bis 11, **dadurch gekennzeichnet, dass** die Trägerfläche eine Elementoberfläche eines Laminat-, Parkett- oder Dielenbodenelements, eines Paneels oder eines Furniers, einem Möbel oder Möbelstück darstellt.

## Claims

1. Process for producing high-gloss surfaces on at least one portion of a substrate area, where the steps comprise:
a) applying a layer made of a melt to at least one portion of the substrate area by means of a roll apparatus comprising at least one metering roll and an applicator roll rotating in a direction of rotation;
b) polishing of the applied layer of melt by a polishing roll rotating in opposition to the direction of rotation of the applicator roll;
c) applying at least one lacquer layer to the polished layer of melt by means of a curtain-coating process;
d) hardening the layer structure applied.

2. Process according to Claim 1, **characterized in that** the melt is a reactive melt, in particular based on a polyurethane.

3. Process according to Claim 1 or 2, **characterized in that** the applicator roll rotates with a velocity in the range from 5 to 60 m/min, preferably from 10 to 25 m/min.

4. Process according to Claim 1 to 3, **characterized in that** the polishing roll rotates with a velocity in the range from 1 to 30 m/min, preferably from 1 to 6 m/min.

5. Process according to any of Claims 1 to 4, **characterized in that** the melt applied in step a) comprises an abrasive material.

6. Process according to any of Claims 1 to 5, **characterized in that** the lacquer layer to be applied in step c) comprises a pourable UV-curing high-gloss lacquer.

7. Process according to any of Claims 1 to 6, **characterized in that** prior to step c) at least one first lacquer layer comprising a UV-curing lacquer is applied with the aid of a roll, by way of spray equipment, or by means of ink jet.

8. Process according to any of Claims 1 to 7, **characterized in that** the step c) uses a wet-on-wet method.

9. Process according to any of Claims 1 to 8, **characterized in that** prior to step d) a waiting time is observed for hardening.

10. Process according to any of the preceding Claims 1 to 9, **characterized in that** the substrate area is composed of wood or of wood-like material, covered with paper, with plastic, or with another material.

11. Process according to Claim 10, **characterized in that** melamine covers the substrate area.

12. Process according to any of the preceding Claims 1 to 11, **characterized in that** the substrate area is an element surface of a laminate element, of a parquet element, or of a floorboard element, of a panel, or of a veneer, furniture, or an item of furniture.

## Revendications

1. Procédé pour la production de surfaces hautement brillantes sur au moins une partie d'une surface support, comprenant les étapes :
a) application d'une couche constituée par une masse fondue sur au moins une partie de la surface support au moyen d'un dispositif à cylindres comprenant au moins un cylindre de dosage et un cylindre d'application tournant dans un sens de rotation ;
b) lissage de la couche de masse fondue appliquée par un cylindre de lissage tournant dans le sens contraire au sens de rotation du cylindre d'application ;
c) application d'au moins une couche de laque sur la couche de masse fondue lissée au moyen d'un procédé de revêtement par rideau ;
d) durcissement de la structure de couches appliquée.

2. Procédé selon la revendication 1, **caractérisé en ce que** la masse fondue est une masse fondue réactive, en particulier à base d'un polyuréthane.

3. Procédé selon la revendication 1 ou 2, **caractérisé en ce que** le cylindre d'application tourne à une vitesse de rotation dans la plage de 5 à 60 m/min, de préférence de 10 à 25 m/min.

4. Procédé selon la revendication 1 à 3, **caractérisé en ce que** le cylindre de lissage tourne à une vitesse de rotation dans la plage de 1 à 30 m/min, de préférence de 1 à 6 m/min.

5. Procédé selon l'une quelconque des revendications 1 à 4, **caractérisé en ce que** la masse fondue appliquée dans l'étape a) contient un matériau abrasif.

6. Procédé selon l'une quelconque des revendications 1 à 5, **caractérisé en ce que** la couche de laque à appliquer dans l'étape c) comprend une laque à couler hautement brillante durcissant aux UV.

7. Procédé selon l'une quelconque des revendications 1 à 6, **caractérisé en ce que**, avant l'étape c), au moins une première couche de laque, comprenant une laque durcissant aux UV, est appliquée à l'aide d'un cylindre, via des dispositifs de pulvérisation ou par jet d'encre.

8. Procédé selon l'une quelconque des revendications 1 à 7, **caractérisé en ce que** l'étape c) est réalisée selon un procédé humide sur humide.

9. Procédé selon l'une quelconque des revendications 1 à 8, **caractérisé en ce que**, avant l'étape d), une phase de repos est respectée pour le durcissement.

10. Procédé selon l'une quelconque des revendications précédentes 1 à 9, **caractérisé en ce que** la surface support est en bois ou en un matériau de type bois qui est revêtu par du papier, par un matériau synthétique ou par un autre matériau.

11. Procédé selon la revendication 10, **caractérisé en ce que** la surface support est revêtue de mélamine.

12. Procédé selon l'une quelconque des revendications précédentes 1 à 11, **caractérisé en ce que** la surface support est une surface d'un élément d'un plancher stratifié, d'un plancher en parquet ou d'un plancher en planches de bois plein, d'un panneau ou d'un placage, d'un meuble ou d'un article d'ameublement.
